(19) Europäisches Patentamt
European Patent Office
Office européen des brevets

(11) **EP 0 968 542 B1**

(12) **EUROPÄISCHE PATENTSCHRIFT**

(45) Veröffentlichungstag und Bekanntmachung des Hinweises auf die Patenterteilung:
**22.08.2007 Patentblatt 2007/34**

(21) Anmeldenummer: **98913673.4**

(22) Anmeldetag: **06.03.1998**

(51) Int Cl.:
*H01M 8/10* (2006.01)   *H01M 8/04* (2006.01)
*H01M 4/86* (2006.01)

(86) Internationale Anmeldenummer:
**PCT/EP1998/001307**

(87) Internationale Veröffentlichungsnummer:
**WO 1998/039809 (11.09.1998 Gazette 1998/36)**

(54) **GASDIFFUSIONSELEKTRODE MIT VERRINGERTEM DIFFUSIONSVERMÖGEN FÜR WASSER UND POLYMERELEKTROLYTMEMBRAN-BRENNSTOFFZELLE**

GAS DIFFUSION ELECTRODE WITH REDUCED DIFFUSING CAPACITY FOR WATER AND POLYMER ELECTROLYTE MEMBRANE FUEL CELLS

ELECTRODE A DIFFUSION GAZEUSE AYANT UNE CAPACITE DE DIFFUSION REDUITE POUR L'EAU ET CELLULE ELECTROCHIMIQUE A MEMBRANE ELECTROLYTIQUE POLYMERIQUE

(84) Benannte Vertragsstaaten:
**AT BE CH DE DK ES FI FR GB IE IT LI NL SE**

(30) Priorität: **06.03.1997 DE 19709199**

(43) Veröffentlichungstag der Anmeldung:
**05.01.2000 Patentblatt 2000/01**

(73) Patentinhaber: **Proton Motor Fuel Cell GmbH 82319 Starnberg (DE)**

(72) Erfinder:
• **KOSCHANY, Arthur**
 **D-82343 Pöcking (DE)**
• **LUCAS, Christian**
 **D-82152 Martinsried (DE)**
• **SCHWESINGER, Thomas**
 **D-94356 Kirchroth (DE)**

(74) Vertreter: **Klunker . Schmitt-Nilson . Hirsch Winzererstrasse 106 80797 München (DE)**

(56) Entgegenhaltungen:
**EP-A- 0 687 023       WO-A-96/24958
WO-A-97/24914       DE-A- 19 544 323
US-A- 3 483 036       US-A- 5 242 764
US-A- 5 399 184       US-A- 5 521 020
US-A- 5 607 785**

• **BERNARDI D M: "WATER-BALANCE CALCULATIONS FOR SOLID-POLYMER-ELECTROLYTE FUEL CELLS" JOURNAL OF THE ELECTROCHEMICAL SOCIETY, Bd. 137, Nr. 11, November 1990, Seiten 3344-3350, XP000606168**
• **WILKINSON D P ET AL: "WATER MANAGEMENT AND STACK DESIGN FOR SOLID POLYMER FUEL CELLS" JOURNAL OF POWER SOURCES, Bd. 49, Nr. 1/03, 1.April 1994, Seiten 117-127, XP000540738**

Bemerkungen:
Die Akte enthält technische Angaben, die nach dem Eingang der Anmeldung eingereicht wurden und die nicht in dieser Patentschrift enthalten sind.

**Beschreibung**

Die Erfindung betrifft eine Gasdiffusionselektrode für eine mit einem Brenngas und einem Sauerstoff enthaltenden Gas zu betreibende Polymerelektrolytmembran-Brennstoffzelle mit einer Anodenelektrode, einer Kathodenelektrode und einer dazwischen angeordneten Polymerelektrolytmembran, eine Polymerelektrolytmembran-Brennstoffzelle mit mindestens einer derartigen Gasdiffusionselektrode und ein Verfahren zum Betreiben einer Polymerelektrolytmembran-Brennstoffzelle.

Polymerelektrolytmembran- Brennstoffzellen enthalten eine Anodenelektrode, eine Kathodenelektrode und eine zwischen ihnen angeordnete Ionenaustauschermembran. Eine Mehrzahl von Brennstoffzellen bildet einen Brennstoffzellenstapel, wobei die einzelnen Brennstoffzellen durch als Stromsammler wirkende bipolare Platten voneinander getrennt werden. Zur Erzeugung von Elektrizität wird ein Brenngas, z. B. Wasserstoff, in den Anodenbereich und ein Oxidationsmittel, z. B. Luft oder Sauerstoff, in den Kathodenbereich eingebracht. Anode und Kathode enthalten in den mit der Polymerelektrolytmembran in Kontakt stehenden Bereichen jeweils eine Katalysatorschicht. Alternativ können die Katalysatorschichten auch auf der mit der Anodenelektrode bzw. der Kathodenelektrode in Kontakt stehenden Oberfläche der Polymerelektrolytmembran aufgebracht sein. In der Anodenkatalysatorschicht wird der Brennstoff unter Bildung von Kationen und freien Elektronen oxidiert, in der Kathodenkatalysatorschicht wird das Oxidationmittel durch Aufnahme von Elektronen reduziert. Die Kationen wandern durch die Ionenaustauschermembran zur Kathode und reagieren mit dem reduzierten Oxidationsmittel, wobei, wenn Wasserstoff als Brenngas und Sauerstoff als Oxidationsmittel verwendet wird, Wasser entsteht.

Die Funktion der Gasdiffusionselektroden besteht vor allem darin, den erzeugten Strom an die Stromsammler abzuleiten und die Reaktionsgase zu den katalytisch aktiven Schichten hindurchdiffundieren zu lassen. Die Elektroden müssen daher elektrisch leitfähig sein und ein ausreichendes Diffusionsvermögen für die Reaktionsgase besitzen. Bevorzugt sollten die Elektroden zumindest in den der Membrane zugewandten Bereichen wasserabweisend sein, um zu verhindern, daß bei der Reaktion gebildetes Wasser die Poren der Elektroden flutet.

Bei der Reaktion von Brenngas und Oxidationsmittel wird Wärme frei, die das in Elektroden und Membran befindliche Wasser verdampfen läßt. Der Dampf wird mit dem Oxidationsmittelstrom abgeführt. Diese Verdampfung bewirkt zum einen eine durchaus erwünschte Kühlung der Brennstoffzelle, zum anderen jedoch führt sie zu einer allmählichen Verarmung der Brennstoffzelle an Feuchtigkeit. Wenn zu viel Wasser durch die porösen Elektroden entweichen kann, sinkt der Feuchtegehalt der Polymerelektrolytmembran. Der Leitwert der Membran hängt sehr stark von ihrem Wassergehalt ab. Eine Verringerung des Feuchtigkeitsgehalts der Polymerelektrolytmembran hat zur Folge, daß ihr innerer Widerstand ansteigt, d. h. ihr Leitwert sinkt. Damit sinkt auch die Leistung der Brennstoffzelle. Eine effiziente Arbeitsweise einer Polymerelektrolytmembran-Brennstoffzelle erfordert daher, daß die Membran stets eine bei den jeweiligen Arbeitsbedingungen (Temperatur, Last) ausreichende Feuchte aufweist. Aus diesem Grunde ist es bei Brennstoffzellen mit konventionellen Gasdiffusionselektroden notwendig, während des Betriebs der Brennstoffzelle der Membran Wasser als Dampf oder als Flüssigkeit zuzuführen. Bei manchen Ausführungsformen erfolgt die Zuführung von Membranbefeuchtungswasser gleichzeitig mit dem Kühlwasser, bei anderen Ausführungsformen ist eine separate Zuführung vorgesehen. Es muß darauf geachtet werden, daß stets genau die richtige Menge an Membranbefeuchtungswasser zugeführt wird, denn eine zu kleine Menge führt zu einem allmählichen Austrocknen der Membran, während eine zu große Menge an zugeführtem Wasser ein Fluten der Elektroden zur Folge hat. Daher ist es erforderlich, während des Betriebs der Brennstoffzellen ständig oder zumindest in kurzen, regelmäßigen Abständen, den Feuchtegehalt der Membran zu ermitteln und ggf. Wasser zuzuführen. Dies bedingt ein zusätzliches, externes Befeuchtungssystem, das die Brennstoffzellen mit zusätzlichem Gewicht belastet und zusätzliche Kosten verursacht. Bis zu einem Drittel des Gewichts sowie der Kosten eines Brennstoffzellenstapels mit konventionellen Elektroden sind durch das externe Befeuchtungssystem bedingt.

Es wird daher versucht, Brennstoffzellen so zu konstruieren, daß ein Austrocknen der Membran vermieden wird. Es gibt auch Versuche, dies ohne Wasserzusatz von außen zu erreichen.

US-A-5 242 764 offenbart Polymerelektrolytmembran-Brennstoffzellen (PEM-BZ) mit Membranen, die im wesentlichen als Randabdichtung dienen und im Zentralbereich eine Öffnung haben. Diese Öffnung im Zentralbereich wird ausgefüllt von Elektrolytabscheidungen auf den Katalysatorschichten der Elektroden. Die Elektrolytabscheidungen erlauben einen Betrieb unter verringertem ohmschen Widerstand, der wiederum geringe Betriebstemperaturen und Reaktionsmittelgasströme erlaubt. Bei niedriger Temperatur und geringen Gasströmen bleibt ausreichend Feuchtigkeit in den Polymerelektrolytmembran-Brennstoffzellen.

"Water-Balance Calculations for Solid-Polymer-Elektrolyte Fuel Cells", (Journal of the Electrochemical Society, Bd. 137, Nr. 11, Nov 1990, S. 3344-3350), offenbart ebenfalls den Betrieb einer PEM-BZ ohne Wasserzusatz, und zwar durch Wahl der Betriebsbedingungen dergestalt, daß nicht mehr Wasser in die Abgasströme abgegeben wird als neu gebildet wird. Dazu wird ein optimaler Wertesatz für Stromdichte, Gasströmungsraten und Gasfeuchtigkeit, Temperatur und Druck eingestellt.

US-A-3 483 036 offenbart eine PEM-BZ mit einer speziell ausgebildeten Membran, die kationenleitende (Protonen) und anionenleitende (Hydroxylionen) Bereiche aufweist. Die Ionen, und daher das Wasser, wandern also in entgegengesetzte Richtungen, und die Gesamtwasserbilanz ist ausgeglichen.

WO97/24914 offenbart den Betrieb einer PEM-BZ ohne oder mit geringer Befeuchtung der Reaktionsgase. Ermöglicht wird dies durch eine Temperaturdifferenz über jeder Zelle, wobei die Reaktanten parallel zum Temperaturgradienten durch die Zellen geführt werden, und wobei die Temperatur am Gaseintritt niedrig und am Gasaustritt hoch ist. WO/97/24914 ist eine prioritätsältere, vor dem internationalen Anmeldedatum, aber noch dem Prioritätsdatum der vorliegenden Anmeldung veröffentlichte Anmeldung.

Gemäß US-A-5 350 643 wird das Wasserabweisungsvermögen der Elektroden durch geeignete Bindemittel eingestellt. Das Wasserabweisungsvermögen der Katalysatorschicht der Wasserstoff-Elektrode ist höher als das der Sauerstoff-Elektrode. Beide Elektroden haben in dem zur Membran weisenden Bereich ein niedrigeres Wasserabweisungsvermögen als in dem zur Diffusionsschicht weisenden Bereich. Dadurch soll ein Austrocknen der PEM vermieden werden.

Dieselbe Wirkung soll in DE 195 13 292C1 dadurch erreicht werden, daß zwischen Kollektoren und Katalysatorschichten jeweils Kohlenstoff-Aerogel vorgesehen wird. Das Kohlenstoff-Aerogel planarisiert die Kollektoren und ermöglicht damit das Aufbringen sehr dünner Membranen, sowie durch guten Kontakt zum Katalysatormaterial einen verbesserten Elektronenfluß. In den dünnen Membranen kann Wasser leichter zu den trockenen Bereichen an der Anodenseite gelangen, so daß die Gefahr des Austrocknens verringert wird.

Die vorgeschlagenen Brennstoffzellen sind teils kompliziert in der Herstellung, teils nicht voll zufriedenstellend in der Wirkung.

Aufgabe der vorliegenden Erfindung ist es daher, eine Gasdiffusionselektrode sowie eine Polymerelektrolytmembran-Brennstoffzelle mit einer solchen Gasdiffusionselektrode bereitzustellen, die es erlaubt, bei kontinuierlichem Brennstoffzellenbetrieb unter im Mittel unveränderten Betriebsbedingungen ohne Wasserzusatz zur Membranbefeuchtung eine ausreichende Membranfeuchte aufrechtzuerhalten.

Aufgabe der Erfindung ist es außerdem, ein Verfahren zum Betreiben einer Polymerelektrolytmembran-Brennstoffzelle bereitzustellen, bei dem eine ausreichende Membranfeuchte aufrechterhalten wird, ohne daß Membranbefeuchtungswasser zugegeben wird.

Die Aufgabe wird gelöst durch die Gasdiffusionselektroden gemäß den Ansprüchen 1 und 10, die Polymerelektrolytmembran-Brennstoffzelle gemäß Anspruch 21 und das Verfahren zum Betreiben einer Polymerelektrolytmembran-Brennstoffzelle gemäß Anspruch 22. Vorteilhafte Weiterbildungen der Erfindung sind in den jeweiligen Unteransprüchen angegeben.

Gegenstand der Erfindung ist somit eine Gasdiffusionselektrode für eine mit einem Brenngas und einem Sauerstoff enthaltenden Gas als Oxidationsmittel zu betreibende Polymerelektrolytmembran-Brennstoffzelle mit einer Anodenelektrode, einer Kathodenelektrode und einer dazwischen angeordneten Polymerelektrolytmembran, die dadurch gekennzeichnet ist, daß sie mindestens in einem Teilbereich ein Füllmaterial enthält, das die effektive Diffusionskonstante der Elektrode für Wasser im Vergleich zur ungefüllten Elektrode verringert, so daß in einer Polymerelektrolytmembran-Brennstoffzelle mit mindestens einer erfindungsgemäßen Gasdiffusionselektrode bei im Mittel unveränderten Betriebsbedingungen nicht mehr als das bei der Reaktion von Brenngas und Oxidationsmittel gebildete Wasser entweicht.

Gegenstand der Erfindung ist außerdem eine Gasdiffusionselektrode für eine mit einem Brenngas und einem Sauerstoff enthaltenden Gas als Oxidationsmittel zu betreibende Polymerelektrolytmembran-Brennstoffzelle mit einer Anodenelektrode, einer Kathodenelektrode und einer dazwischen angeordneten Polymerelektrolytmembran, die dadurch gekennzeichnet ist, daß sie ein Elektrodenmaterial und eine Schicht aus mindestens einem weiteren Material aufweist, wobei die Schicht die effektive Diffusionskonstante der Elektrode für Wasser verringert, so daß in einer Polymerelektrolytmembran-Brennstoffzelle mit mindestens einer erfindungsgemäßen Gasdiffusionselektrode bei im Mittel unveränderten Betriebsbedingungen nicht mehr als das bei der Reaktion von Brenngas und Oxidationsmittel gebildete Wasser entweicht.

Gegenstand der Erfindung ist ferner eine Polymerelektrolytmembran-Brennstoffzelle mit einer Anodenelektrode, einer Kathodenelektrode und einer dazwischen angeordneten Polymerelektrolytmembran, die dadurch gekennzeichnet ist, daß mindestens eine der Elektroden eine erfindungsgemäße Gasdiffusionselektrode ist.

Gegenstand der Erfindung ist auch ein Verfahren zum Betreiben einer Polymerelektrolytmembran-Brennstoffzelle mit einer Anodenelektrode, einer Kathodenelektrode und einer dazwischen angeordneten Polymerelektrolytmembran, das dadurch gekennzeichnet ist, daß bei im Mittel unveränderten Betriebsbedingungen keine Zugabe von Wasser zur Befeuchtung der Membran erfolgt und daß mindestens eine der Elektroden eine erfindungsgemäße Gasdiffusionselektrode ist.

In den Zeichnungen zeigen:

Figur 1      eine Gasdiffusionselektrode gemäß einer bevorzugten Ausführungsform der Erfindung; und

Figur 2      eine Gasdiffusionselektrode gemäß einer weiteren bevorzugten Ausführungsform der Erfindung.

Gasdiffusionselektroden bestehen aus porösen Materialien, typischerweise aus Matten aus graphitisiertem Gewebe. Je poröser das Elektrodenmaterial ist, desto bessere Diffusionseigenschaften für die Reaktionsgase sind zu erwarten, desto schneller wird aber auch eine Verarmung der Membran an Feuchtigkeit eintreten, sofern kein externes System zur Membranbefeuchtung vorgesehen ist.

Die Erfindung basiert auf der Grundlage, daß es möglich ist, die effektive Diffusionskonstante von Gasdiffusionselektroden so zu verändern, daß gerade noch die notwendige Menge an Reaktionsgasen, die zum Erzielen einer gewünschten Stromdichte erforderlich ist, den Katalysator erreichen kann, während die Diffusion von Wasserdampf von der Katalysatorschicht in den Gasraum so stark erschwert wird, daß ein Austrocknen der Membran vermieden wird. Die Membran behält also ihre Leitfähigkeit.

Bei Brennstoffzellen, die mit Luft oder Sauerstoff als Oxidationsmittel arbeiten, erfolgt die Bildung des Reaktionswassers kathodenseitig der Membran. Die erfindungsgemäße Ausbildung der Gasdiffusionselektrode ist daher besonders vorteilhaft für die Kathode und es ist häufig ausreichend, Brennstoffzellen nur mit einer erfindungsgemäßen Kathode, aber einer konventionellen Anode auszurüsten. Generell ist die erfindungsgemäße Modifizierung der Gasdiffusionselektroden natürlich sowohl für Kathoden als auch für Anoden möglich.

Erfindungsgemäße Elektroden lassen unter geeigneten Betriebsbedingungen nicht mehr als das gebildete Wasser entweichen, d. h., es ist lediglich eventuell erforderlich, in der Anlaufphase der Brennstoffzellen den Feuchtigkeitsgehalt der Membran entsprechend den Betriebsbedingungen einzustellen. Das kann gegebenenfalls einfach durch Zerstäuben von Wasser im Kathodenraum erfolgen. Während der nachfolgenden Phase kontinuierlichen Betriebs unter im wesentlichen konstanten Bedingungen bleibt die Feuchtigkeit der Membran erhalten, ohne daß Wasser zugesetzt wird. Voraussetzung für einen derartigen Brennstoffzellenbetrieb ohne Wasserzusatz ist, daß bei gegebener Zellspannung und Luftzahl eine Elektrodentemperatur eingestellt wird, bei der die Wasserbilanz ausgeglichen ist, d. h., bei der ebenso viel Wasser entsteht, wie durch Diffusion verloren geht. Das Kühlsystem muß jeweils diese Temperatur oder eine Temperatur knapp darunter einstellen. Es wurde gefunden, daß die effektive Diffusionskonstante von Gasdiffusionselektroden in einem Bereich variiert werden kann, daß bei gegebener Zellspannung und Luftzahl für einen breiten Bereich von Stromdichten unterhalb der Grenzstromdichte eine ausgeglichene Wasserbilanz erreicht werden kann. Um die Kühlung zu vereinfachen ist es bevorzugt, daß Elektrodentemperaturen von mindestens 50˚C eingestellt werden. Besonders bevorzugt sind Elektrodentemperaturen im Bereich von 60 bis 75˚C. Je höher der Luftdruck und je kleiner die Luftzahl gewählt wird, um so höher kann die Betriebstemperatur liegen. Wird die Luft unter Umgebungsdruck zugeführt, so liegt die maximal mögliche Betriebstemperatur bei etwa 75˚C. Dieser Wert ist bedingt durch die Diffusionseigenschaften der Elektroden. Die erfindungsgemäße Modifizierung der Diffusionseigenschaften von Gasdiffusionselektroden ermöglicht zwar eine effiziente Beschränkung der Diffusion von Wasser, beeinflußt in geringerem Umfang aber auch die Diffusion der Reaktionsgase. Ab einer bestimmten Temperatur, die bei Umgebungsdruck bei etwa 75˚C liegt, würde eine Gasdiffusionselektrode mit einem ausreichend kleinen effektiven Diffusionskoeffizienten für Wasser keine ausreichende Diffusion mehr für die Reaktionsgase, insbesondere Sauerstoff, gewährleisten. Eine Erhöhung des Luftdrucks ermöglicht es jedoch, die Arbeitstemperatur weiter zu steigern.

Die Gasdiffusionselektroden gemäß der Erfindung können ausgehend von üblichen Elektrodenmaterialien hergestellt werden. Alternativ besonders bevorzugt sind Elektroden gemäß der deutschen Patentanmeldung Nr. 195 44 323.3-45. Diese Elektroden bestehen aus mindestens einem Kohlefaservlies, das mit Ruß und Polytetrafluorethylen im wesentlichen homogen imprägniert ist. Die Herstellung dieser Elektroden wird nachstehend noch beschrieben werden.

Die erfindungsgemäßen Gasdiffusionselektroden zeichnen sich dadurch aus, daß gleichzeitig ihre effektive Diffusionskonstante für Reaktionsgase, insbesondere Sauerstoff, groß genug und ihre effektive Diffusionskonstante für Wasser klein genug ist, daß in mit den erfindungsgemäßen Gasdiffusionselektroden ausgestatteten Polymerelektrolytmembran-Brennstoffzellen einerseits eine ausreichende Diffusion der Reaktionsgase gewährleistet ist, während andererseits die Diffusion von Wasserdampf so stark eingeschränkt wird, daß die Wasserbilanz ausgeglichen ist. Die Membran bleibt daher feucht.

Gasdiffusionselektroden mit den erforderlichen effektiven Diffusionskonstanten können durch unterschiedliche Arten von Modifikation üblicher Elektroden erhalten werden.

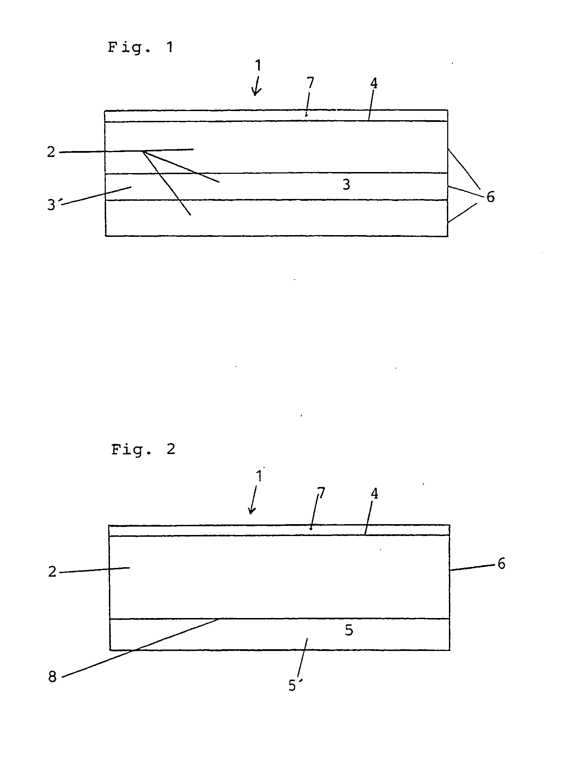

Eine Möglichkeit das Elektrodenmaterial gegen Wasserverluste abzudichten, besteht darin, ein Füllmaterial in einen Teilbereich oder den gesamten Diffusionsbereich der Elektrode einzubringen. Das Füllmaterial verkleinert die Poren in dem Elektrodenmaterial oder verschließt sie vollständig, so daß die Diffusion gehemmt wird. Soll das Füllmaterial nur in einem Teilbereich der Elektrode enthalten sein, so ist es bevorzugt, das Füllmaterial wie in Fig. 1 gezeigt einzubringen. Fig. 1 zeigt eine Gasdiffusionselektrode 1 mit einer Gasdiffusionsschicht 6 aus einem Elektrodenmaterial 2. An einer Oberfläche 4 der Elektrode ist eine Katalysatorschicht 7 vorgesehen. Die Diffusionsschicht enthält ein Füllmaterial 3 in einem Teilbereich 3'. Der Teilbereich 3' erstreckt sich über die gesamte Fläche der Elektrode, jedoch nicht über ihre gesamte Dicke, reicht also nicht bis an die Oberflächen der Elektrode. Bei gegebenem Füllmaterial 3 ist die Diffusionshemmung umso stärker ausgeprägt, je größer die Füllmaterial enthaltenden Bereiche sind. Das Füllmaterial erstreckt sich jedoch bevorzugt nicht bis in die Katalysatorschicht 7 der Elektrode 1 hinein.

Als Füllmaterialien sind feste oder flüssige Stoffe geeignet, die in die Poren einer Elektrode eingebracht werden können und unter den Betriebsbedingungen einer Polymerelektrolytmembran-Brennstoffzelle im wesentlichen unverändert dort verbleiben.

Feststoffe werden bevorzugt in Form einer Suspension in die Poren der Elektrode eingebracht. Gut geeignete Füllmaterialien sind Ruß, Graphit, Metalle und Kunststoffe, insbesondere PTFE. Auch dasselbe Material, aus dem die Elektrode hergestellt ist, kann, in feinteiliger Form, als Füllstoff verwendet werden.

Wenig oder nicht poröse Feststoffe als Füllmaterial verringern die effektive Diffusionskonstante der Elektrode deutlicher als poröse Füllmaterialien. Die Füllmaterialteilchen können beliebige Formen aufweisen, beispielsweise können sie pulverförmig, faserförmig oder plättchenförmig sein. Eine besonders dichte Elektrodenstruktur erhält man, wenn die Elektroden nach dem Füllen mit Füllmaterial zusätzlich gepreßt werden.

Die Möglichkeit, das Elektrodenmaterial durch Pressen zu verdichten, wird bei Elektroden gemäß der deutschen Patentanmeldung Nr. 195 44 323.3-45, die aus mindestens einem Kohlefaservlies, das mit Ruß und Polytetrafluorethylen im wesentlichen homogen imprägniert ist, bestehen, angewandt. Das Pressen erfolgt bevorzugt vor dem Katalysatorauftrag, bei einem Druck von 10 bis 400 MPa (1.000 bis 4.000 bar), bevorzugt 200 bis 350 MPa (2.000 bis 3.500 bar).

Das Füllmaterial kann auch eine Flüssigkeit sein. Besonders geeignet sind unpolare, hydrophobe Flüssigkeiten, da sie ein stark unterschiedliches Verhalten gegenüber Wasser und den Brenngasen zeigen. Hydrophobe Flüssigkeiten hemmen die Diffusion von Wasser sehr stark, lösen aber die unpolaren Brenngase wie Wasserstoff und Sauerstoff, so daß diese weniger gehindert diffundieren können. Besonders gut geeignet als flüssige Füllmaterialien sind Fluor-Kohlenstoff-Verbindungen, insbesondere Hostinert® (Produkt der Fa. Hoechst AG).

Gemäß einer weiteren Ausführungsform der erfindungsgemäßen Gasdiffusionselektrode kann die Verringerung der effektiven Diffusionskonstante durch Anbringen einer Schicht aus einem weiteren Material an einer Oberfläche der Elektrode erfolgen. Eine derartige Ausführungsform ist in Fig. 2 gezeigt. Die Gasdiffusionselektrode 1 gemäß Fig. 2 besteht aus einem Elektrodenmaterial 2, welches eine Diffusionschicht 6 bildet, einer an einer Oberfläche 4 angebrachten Katalysatorschicht 7 und einer an der anderen Oberfläche 8 angebrachten Schicht 5' aus einem weiteren Material 5. Das Material 5 kann mit dem Elektrodenmaterial 2 identisch sein, so daß die Verringerung der effektiven Diffusionskonstante durch einfaches Verdicken der Elektrode zustande kommt. Gut geeignete Materialien sind Ruß, Graphit, Metalle und Kunststoffe sowie Gemische aus diesen Materialien. Bevorzugt wird die Schicht 5' aus carbonisiertem oder graphitisiertem Polyimid, aus carbonisiertem oder graphitisiertem Polyacrylnitril oder aus gerecktem PTFE hergestellt. Die Herstellung kann erfolgen durch Aufbringen eines Materials 5 in feinteiliger Form, z. B. in Form von Pulver, Plättchen oder Fasern, auf eine Oberfläche 8 der Gasdiffusionsschicht 6 und anschließendes Pressen. Bei dem Preßvorgang wird die Schicht 5' aus dem Material 5 verdichtet, wobei an der Grenzfläche zwischen Diffusionsschicht 6 und weiterer Schicht 5' ein Teil des Materials 5 in Poren der Diffusionsschicht 6 eindringen kann. Die zusätzliche diffusionshemmende Schicht 5' kann aus einem Material oder aus Gemischen unterschiedlicher Materialien bestehen. Besonders bevorzugt ist eine Schicht 5' aus einem aufgepreßten Gemisch von Graphit- und PTFE-Pulver sowie eine Schicht aus Metall- oder Graphitplättchen. Wenn die Schicht 5' aus einem elektrisch nicht leitfähigen oder schlecht leitfähigem Material besteht, muß sie durchgehende Öffnungen aufweisen, durch die Stromableiter hindurchgeführt werden können. Auch bei leitenden Materialien können Durchführungen erforderlich sein, beispielsweise für Zu- und Ableitungen von Reaktionsgasen. Ist die Schicht 5' zu dicht, um eine ausreichende Diffusion der Reaktionsgase zu erlauben, z.B. im Falle beigelegter Metallplättchen, sind in der Schicht 5' Öffnungen zum Durchtritt der Reaktionsgase vorzusehen.

Im folgenden werden verschiedene Verfahren zur Herstellung erfindungsgemäßer Gasdiffusionselektroden beispielhaft beschrieben:

Beispiel 1:

45 g Ruß (Vulcan XC72) werden in 450 ml Wasser und 495 ml Isopropanol suspendiert. Diese Suspension wird intensiv gemischt mit 32,17 g einer PTFE-Suspension (60% Hostaflonfasern in wäßriger Suspension). Mit der resultierenden Mischung wird ein carbonisiertes Kohlefaservlies (3 mg/cm$^2$) gleichmäßig bestrichen und das Vlies anschließend bei ca. 70˚C getrocknet. Das Bestreichen und Trocknen wird zweimal wiederholt. Nach dem letzten Trocknen wird das imprägnierte Kohlefaservlies ca. 30 Minuten lang bei 400˚C gesintert. Man erhält ein gleichmäßig mit Vulcan XC72 und Hostaflon imprägniertes Kohlefaservlies mit einer Masse von 7,8 bis 8 mg/cm$^2$. Der PTFE-Gehalt beträgt 30% bezüglich der Gesamtmasse von Ruß plus PTFE. Das homogen imprägnierte Vlies entspricht einer Gasdiffusionselektrode gemäß der deutschen Patentanmeldung Aktenzeichen 195 44 323.3-45.

Zur Herstellung der erfindungsgemäßen Gasdiffusionselektrode werden vier der wie oben erläutert hergestellten Kohlefaservliese übereinander gelegt und mit 320 MPa (3200 bar) gepreßt. Dabei werden die Kohlefaservliese fest miteinander verbunden und so stark verdichtet, daß sie der Diffusion von Wasser einen hohen Widerstand entgegensetzen, Wasserstoff und auch Sauerstoff jedoch befriedigend gut durchdiffundieren lassen.

Beispiel 2:

Als Ausgangsmaterialien werden drei carbonisierte Kohlefaservliese mit einer Masse von 3 mg/cm$^2$ verwendet.

Eines der Vliese wird imprägniert mit einer Suspension aus 30% Hostaflon (PTFE) TF5032, 7% Graphit (KS75 der Firma Timcal) und 63% Ruß (Vulcan XC72 der Firma Cabot) in einem Gemisch aus Isopropanol und Wasser. Die Endmasse des trockenen Vlieses beträgt 10 mg/cm$^2$.

Das zweite Vlies wird imprägniert mit einer Suspension aus 30% Hostaflon, 40% Graphit und 30% Ruß in Isopropanol und Wasser als Suspensionsmittel. Die Endmasse des trockenen Vlieses beträgt 16 mg/cm$^2$.

Das dritte Vlies wird imprägniert mit einer Suspension aus 10% Hostaflon, 80% Graphit und 10% Ruß in Isopropanol und Wasser als Suspensionsmittel. Die Endmasse des trockenen Vlieses beträgt 22 mg/cm$^2$.

Die Vliese werden bei 400°C fünf Minuten lang gesintert, aufeinander gestapelt und bei 140°C mit 20 bis 30 MPa (200 bis 300 bar) verpreßt. Anschließend kann an der Oberfläche des 1. Vlieses eine Katalysatorschicht aufgetragen werden und die Gasdiffusionselektrode mit einer Polymerelektrolytmembran und einer weiteren Elektrode zu einer Membranelektrodeneinheit kombiniert werden.

Beispiel 3:

Aus Hostaflon (5 %) und Graphit (95%) wird eine dickflüssige Suspension in Isopropanol/Wasser hergestellt. Die Suspension wird in einer Schichtstärke von 0,8 mm auf eine Edelstahlplatte aufgebracht und getrocknet. Anschließend wird eine herkömmliche Gasdiffusionselektrode oder eine oder zwei wie unter Beispiel 1 hergestellte Kohlefaservlieselektrode(n) aufgepreßt und die Elektrode mit der Schicht aus Hostaflon und Graphit gesintert. Nach dem Sintern kann an der nicht mit der Hostaflon/Graphit-Schicht bedeckten Oberfläche der Gasdiffusionselektrode Katalysator aufgetragen werden. Es ist auch möglich, auf die Hostaflon-Graphit-Schicht eine bereits einen Katalysator tragende Gasdiffusionselektrode aufzupressen, so daß die Hostaflon-Graphit-Schicht zwischen zwei Schichten aus Elektrodenmaterial angeordnet ist. Dann müssen jedoch beim Sintern Temperaturen verwendet werden, die dem Katalysator nicht schaden.

Die erfindungsgemäße Gasdiffusionselektrode mit diffusionshemmender Schicht aus Graphit/Hostaflon kann wiederum mit einer Polymerelektrolytmembran und einer weiteren Elektrode zu einer Membranelektrodeneinheit kombiniert werden. Wenn die Graphit/Hostaflon-Schicht an einer äußeren Oberfläche angebracht ist, ist es vorteilhaft, ein Kohlenstoffpapier oder ein imprägniertes Kohlefaservlies zu ihrem Schutz beizulegen.

Beispiel 4:

Aus beliebigen herkömmlichen Elektroden und einer Polymerelektrolytmembran wird eine Membranelektrodeneinheit hergestellt. Die Kathode wird mit einem 0,1 mm dicken Blech aus Nickel oder Edelstahl hinterlegt. Das Blech weist in einem quadratischen Raster von 1,2 mm Bohrungen mit 0,3 bis 0,4 mm Durchmesser auf. Die Oberfläche der Kathode ist also teilweise abgedeckt, wodurch weniger freie Oberfläche zum Entweichen von Wasser zur Verfügung steht.

In Polymerelektrolytmembran-Brennstoffzellen können beide Elektroden als erfindungsgemäße Gasdiffusionselektroden mit verringertem Diffusionsvermögen für Wasser ausgebildet sein. In der Regel ist es ausreichend, wenn eine Elektrode, die Kathode, erfindungsgemäß ausgebildet ist.

Polymerelektrolyt-Brennstoffzellen, die mit mindestens einer erfindungsgemäßen Elektrode ausgestattet sind, können bei kontinuierlichem Betrieb ohne externe Befeuchtung, d. h. ohne Wasserzugabe, betrieben werden, denn da nicht mehr als das bei der Reaktion von Brenngas und Oxidationsmittel gebildete Wasser entweicht, behält die Membran ihre Feuchtigkeit bei. Es ist ausreichend, die Membran bei Betriebsbeginn und ggf. bei einer Änderung der Betriebsbedingungen zu befeuchten. Daher kann auf eine ständig an der Brennstoffzelle angebrachte Einrichtung zur Befeuchtung verzichtet werden, was Gewicht und Kosten spart. Die Kühlung kann durch Kühleinrichtungen, wie beispielsweise durch in den Bipolarplatten vorgesehene wasserdurchströmte Kühlschlangen oder Kühlplatten erfolgen oder durch in die Kathodenräume geblasene Luft. Die direkte Luftkühlung (durch trockene Luft) ist zumindest bei kleineren Brennstoffzellenstapeln möglich und spart gegenüber der Wasserkühlung wiederum Gewicht und Kosten. Außerdem können bei Luftkühlung Korrosionsprobleme im Kühlsystem aufgrund unterschiedlicher elektrischer Potentiale vermieden werden.

Luftgekühlte Brennstoffzellenstapel mit erfindungsgemäßen Gasdiffusionselektroden sind also von einer externen Wasserversorgung unabhängig.

Die Werte der jeweils optimalen Diffusionskonstanten der erfindungsgemäßen Gasdiffusionselektroden sind abhängig von den Betriebsbedingungen der Brennstoffzellen. Bei einer Membran Gore Select 20 $\mu$m und bei bevorzugten Betriebsbedingungen mit einem Luftdruck von 6 kPa (60 mbar) Überdruck, der Luftzahl 16, einem Wasserstoffdruck von 38 kPa (0,38 bar) Überdruck, einer Elektrodentemperatur von etwa 70°C und einer Stromdichte von 503 mA/cm$^2$ bei 625 mV, sollte die effektive Diffusionskonstante für Wasser im Bereich von 3 x 10$^{-3}$ bis 15 x 10$^{-3}$ cm$^2$/s und die effektive Diffusionskonstante für Sauerstoff im Bereich von 2 x 10$^{-3}$ bis 12 x 10$^{-3}$ cm$^2$/s liegen. Die optimalen effektiven Diffusionskonstanten für Wasser und Sauerstoff unter diesen Betriebsbedingungen betragen 7,7 x 10$^{-3}$ cm$^2$/s bzw. 5,7 x 10$^{-3}$ cm$^2$/s (bezogen auf 20°C).

Ferner sind die Werte der optimalen Diffusionskonstanten abhängig von Eigenschaften der Membran (z. B. Leitfähigkeit in Abhängigkeit vom Wassergehalt; Wasserdampfpartialdruck in Abhängigkeit von Temperatur und Wassergehalt). In Abhängigkeit von dem verwendeten System und den Betriebsbedingungen können daher die Werte der optimalen Diffusionskonstanten innerhalb breiter Bereiche variieren. Wesentlich ist, daß die Diffusionskonstante einen Wert aufweist, bei dem für das gewählte System gewährleistet ist, daß Wasserdampf nur schlecht diffundieren kann und somit eine ausreichende Membranfeuchte garantiert ist, während die Reaktionsgase noch ausreichend diffundieren können. Dementsprechend muß die Porosität der Elektroden mittels geeigneter Maßnahmen, wie vorstehend ausgeführt, eingestellt werden.

Im folgenden werden einige Beispiele für aufeinander abgestimmte Systeme angegeben:

Eine Polymerelektrolytmembran-Brennstoffzelle mit einer konventionellen Anode, einer Membran Gore Select (Dicke 20 $\mu$m) und einer Kathode gemäß Beispiel 1 oder einer Kathode gemäß Beispiel 3, bestehend aus einer Schichtstruktur aus Kohlefaservlieselektrode, Graphit/Hostaflon-Schicht und Katalysator tragender Gasdiffusionselektrode (Elektrode nach der deutschen Patentanmeldung Nr. 195 44 323.3-45), wird unter folgenden Bedingungen betrieben:

| | |
|---|---|
| H$_2$-Überdruck: | 50 kPa (0,5 bar) |
| Luft-Überdruck: | 6 kPa (0,06 bar) |
| Luftzahl: | 16 |
| Kathodentemperatur: | 68°C |

Die verwendeten Kathoden besitzen effektive Diffusionskonstanten für Wasser und Sauerstoff von 7,7 x 10$^{-3}$ cm$^2$/s bzw. 5,7 x 10$^{-3}$ cm$^2$/s.

Dabei ergehen sich folgende Leistungsdaten:

| U [mV] | $I \dfrac{mA}{cm^2}$ |
|---|---|
| 965 | 0 |
| 891 | 9,5 |
| 768 | 175 |
| 735 | 240 |
| 665 | 470 |
| 625 | 503 |
| 150 | 675 |

Der günstigste Lastpunkt liegt bei 503 mA/cm$^2$. Bei 675 mA/cm$^2$ wirkt sich die Diffusionshemmung extrem aus.

Eine Reduzierung der Luftzahl auf 1,5 bewirkt, daß die Kathodentemperatur auf etwa 78°C erhöht werden kann. Die erreichbare Zellspannung bleibt dann jedoch unterhalb 625 mV.

Bei folgenden Betriebsbedingungen

| | |
|---|---|
| H$_2$-Überdruck: | 50 kPa (0,5 bar) |
| Luft-Überdruck: | 100 kPa (0,06 bar) |
| Luftzahl: | 1,5 |
| Kathodentemperatur: | 78°C |
| Stromdichte: | 500 mA/cm$^2$ |

können die effektiven Diffusionskonstanten der Kathode um etwa 25% auf 9,6 x 10$^{-3}$ cm$^2$/s für Wasserdampf und 7,1 x 10$^{-3}$ cm$^2$/s für Sauerstoff erhöht werden. Die Zellspannung liegt dann bei mehr als 625 mV.

Bei gegebener effektiver Diffusionskonstante sollten die Elektroden möglichst dünn (also sehr dicht) sein, um eine gute Wärmeableitung durch gute Wärmeleitfähigkeit zu ermöglichen.

Von besonderem Vorteil ist es, mit erfindungsgemäßen Gasdiffusionselektroden ausgestattete Brennstoffzellen während 0,1 bis 20% der Betriebszeit, bevorzugt 4 bis 10% der Betriebszeit, so stark zu belasten, daß die Zellspannung auf einen Wert unter 300 mV, bevorzugt unter 150 mV, sinkt. Ein derartiges kurzzeitiges Kurzschließen, das bevorzugt in regelmäßigen Abständen durchgeführt wird, bewirkt jeweils eine vorübergehende Leistungserhöhung der Zelle. Es empfiehlt sich daher, zwecks Leistungserhöhung die Zellen mit einer bestimmten Frequenz zu "pulsen": Intervalle kurzzeitiger Kurzschlüsse (z. B. ca 1 sec) wechseln mit Intervallen normalen Brennstoffzellenbetriebs (z. B. ca. 1 min). Die Zeitdauer der Normalbetriebsintervalle richtet sich nach der Zeitdauer der erzielten Leistungssteigerung. Sinkt die Leistung unter einen gewünschten Minimalwert, wird erneut kurzgeschlossen usw.

Das Verfahren der Leistungssteigerung von Brennstoffzellen durch gepulsten Betrieb ist unabhängig vom gewählten Elektrodentyp und kann bei jeder Brennstoffzelle durchgeführt werden.

Die Erfindung stellt Gasdiffusionselektroden mit verringertem Diffusionsvermögen für Wasser zur Verfügung. Der Einsatz dieser Elektroden ermöglicht es, Polymerelektrolytmembran-Brennstoffzellen ohne Wasserzusatz und ggf. mit direkter Luftkühlung zu betreiben. Dadurch ergeben sich gegenüber konventionellen Brennstoffzellen beträchtliche Einsparungen hinsichtlich Gewicht und Kosten.

**Patentansprüche**

**1.** Gasdiffusionselektrode (1) für eine mit einem Brenngas und einem Sauerstoff enthaltenden Gas als Oxidationsmittel zu betreibende Polymerelektrolytmembran-Brennstoffzelle mit einer Anodenelektrode, einer Kathodenelektrode und einer dazwischen angeordneten Polymerelektrolytmembran,

**dadurch gekennzeichnet,**
**daß** sie mindestens in einem Teilbereich (3') ein Füllmaterial (3) enthält, das die effektive Diffusionskonstante der Elektrode (1) für Wasser im Vergleich zur ungefüllten Elektrode verringert, so daß in einer Polymerelektrolytmembran-Brennstoffzelle mit mindestens einer Gasdiffusionselektrode (1) bei im Mittel unveränderten Betriebsbedingungen nicht mehr als das bei der Reaktion von Brenngas und Oxidationsmittel gebildete Wasser entweicht.

2. Gasdiffusionselektrode (1) nach Anspruch 1,
**dadurch gekennzeichnet,**
**daß** das Füllmaterial (3) in einem Teilbereich (3') enthalten ist, der nicht von einer Oberfläche (4) der Elektrode (1) begrenzt wird.

3. Gasdiffusionselektrode (1) nach Anpruch 1 oder 2,
**dadurch gekennzeichnet,**
**daß** sie aus mindestens einer Gasdiffusionsschicht (6) und einer Katalysatorschicht (7) aufgebaut ist und daß sich das Füllmaterial (3) ausschließlich in der Diffusionsschicht (6) befindet.

4. Gasdiffusionselektrode (1) nach einem der Ansprüche 1 bis 3,
**dadurch gekennzeichnet,**
**daß** das Füllmaterial ein nicht poröser Feststoff ist.

5. Gasdiffusionselektrode (1) nach Anspruch 4,
**dadurch gekennzeichnet,**
**daß** das Füllmaterial Ruß und/oder Graphit und/oder ein Metall und/oder ein Kunststoff ist.

6. Gasdiffusionselektrode (1) nach Anspruch 5,
**dadurch gekennzeichnet,**
**daß** der Kunststoff PTFE ist.

7. Gasdiffusionselektrode (1) nach einem der Ansprüche 1 bis 6,
**dadurch gekennzeichnet,**
**daß** das Füllmaterial in Form von Pulver, Fasern oder Plättchen vorliegt, die als Suspension eingebracht wurden.

8. Gasdiffusionselektrode (1) nach einem der Ansprüche 1 bis 3,
**dadurch gekennzeichnet,**
**daß** das Füllmaterial eine Flüssigkeit ist.

9. Gasdiffusionselektrode (1) nach Anspruch 8,
**dadurch gekennzeichnet,**
**daß** die Flüssigkeit eine Fluor-Kohlenstoff-Verbindung ist.

10. Gasdiffusionselektrode (1) für eine mit einem Brenngas und einem Sauerstoff enthaltenden Gas als Oxidationsmittel zu betreibende Polymerelektrolytmembran-Brennstoffzelle mit einer Anodenelektrode, einer Kathodenelektrode und einer dazwischen angeordneten Polymerelektrolytmembran,
**dadurch gekennzeichnet,**
**daß** sie ein Elektrodenmaterial (2) und eine Schicht (5') aus mindestens einem weiteren Material (5) aufweist, wobei die Schicht (5') die effektive Diffusionskonstante der Elektrode (1) für Wasser verringert, so daß in einer Polymerelektrolytmembran-Brennstoffzelle mit mindestens einer Gasdiffusionselektrode (1) bei im Mittel unveränderten Betriebsbedingungen nicht mehr als das bei der Reaktion von Brenngas und Oxidationsmittel gebildete Wasser entweicht.

11. Gasdiffusionselektrode (1) nach Anspruch 10,
**dadurch gekennzeichnet,**
**daß** das weitere Material (5) Ruß und/oder ein Metall und/oder ein Kunststoff ist.

12. Gasdiffusionselektrode (1) nach Anspruch 10,
**dadurch gekennzeichnet,**
**daß** das weitere Material (5) carbonisiertes oder graphitisiertes Polyimid oder carbonisiertes oder graphitisiertes Polyacrylnitril oder gerecktes PTFE ist.

13. Gasdiffusionselektrode (1) nach Anspruch 10,
**dadurch gekennzeichnet,**
**daß** die Schicht aus dem weiteren Material (5) aus einem aufgepreßten Gemisch von Graphit- und PTFE-Pulver besteht.

14. Gasdiffusionselektrode (1) nach Anspruch 10,
**dadurch gekennzeichnet,**
**daß** die Schicht aus dem weiteren Material (5) aus Metall- oder Graphitplättchen besteht.

15. Gasdiffusionselektrode (1) nach einem der Ansprüche 10 bis 14,
**dadurch gekennzeichnet,**
**daß** die Schicht aus dem weiteren Material (5) mit durchgehenden Öffnungen versehen ist.

16. Gasdiffusionselektrode (1) nach einem der Ansprüche 1 bis 9,
**dadurch gekennzeichnet,**
**daß** sie eine Schicht (5') aus mindestens einem weiteren Material (5) gemäß einem der Ansprüche 10 bis 15 aufweist.

17. Gasdiffusionselektrode (1) nach einem der Ansprüche 1 bis 16,
**dadurch gekennzeichnet,**
**daß** das Elektrodenmaterial (2) mindestens ein Kohlefaservlies aufweist, das mit Ruß und PTFE, bevorzugt homogen, imprägniert ist.

18. Gasdiffusionselektrode (1) nach Anspruch 17,

**dadurch gekennzeichnet,**
**daß** die Elektrodenmaterial (2) mindestens zwei Lagen eines Kohlefaservlieses aufweist, das mit Ruß und PTFE, bevorzugt homogen, imprägniert ist.

19. Gasdiffusionselektrode (1) nach Anspruch 17 oder 18,
    **dadurch gekennzeichnet,**
    **daß** sie aus einem Elektrodenmaterial (2) besteht, das durch Pressen bei einem Druck von 100 bis 400 MPa (1000 bis 4000 bar)verdichtet ist.

20. Gasdiffusionselektrode (1) nach Anspruch 19,
    **dadurch gekennzeichnet,**
    **daß** das Elektrodenmaterial (2) durch Pressen bei einem Druck von 200 bis 350 MPa (2000 bis 3500 bar) verdichtet ist.

21. Polymerelektrolytmembran-Brennstoffzelle mit einer Anodenelektrode, einer Kathodenelektrode und einer dazwischen angeordneten Polymerelektrolytmembran,
    **dadurch gekennzeichnet,**
    **daß** mindestens eine der Elektroden eine Gasdiffusionselektrode (1) nach einem der Ansprüche 1 bis 20 ist.

22. Verfahren zum Betreiben einer Polymerelektrolytmembran-Brennstoffzelle mit einer Anodenelektrode, einer Kathodenelektrode und einer dazwischen angeordnetenen Polymerelektrolytmembran,
    **dadurch gekennzeichnet,**
    **daß** bei im Mittel unveränderten Betriebsbedingungen keine Zugabe von Wasser zur Befeuchtung der Membran erfolgt und daß mindestens eine der Elektroden eine Gasdiffusionselektrode (1) gemäß einem der Ansprüche 1 bis 20 ist.

23. Verfahren nach Anspruch 22,
    **dadurch gekennzeichnet,**
    **daß** die Elektrodentemperatur mindestens 50˚ C, bevorzugt 60 bis 75˚C, beträgt.

24. Verfahren nach Anspruch 22 oder 23,
    **dadurch gekennzeichnet,**
    **daß** die Zelle während 0,01 bis 20% der Betriebszeit, bevorzugt 4 bis 10% der Betriebszeit, dergestalt belastet wird, daß die Zellspannung auf einen Wert unter 300 mV sinkt.

25. Verfahren nach Anspruch 24,
    **dadurch gekennzeichnet,**
    **daß** die Zellspannung auf einen Wert unter 150 mV sinkt.

26. Verfahren nach einem der Ansprüche 22 bis 25,
    **dadurch gekennzeichnet,**
    **daß** die Kühlung der Brennstoffzelle ausschließlich mittels Luftstroms, bevorzugt durch den Kathodenraum, erfolgt.

27. Verfahren nach einem der Ansprüche 22 bis 25,
    **dadurch gekennzeichnet,**
    **daß** die Kühlung der Brennstoffzelle durch eine separat vorgesehene Kühleinrichtung erfolgt.

**Claims**

1. A gas diffusion electrode (1) for a polymer electrolyte membrane fuel cell to be operated with a burnable gas and an oxygen-containing gas as oxidizing agent and having an anode electrode, a cathode electrode and a polymer electrolyte membrane disposed therebetween,
   **characterized in that** it contains at least in a partial region (3') a filling material (3) which reduces the effective diffusion constant of the electrode (1) for water in comparison with the unfilled electrode, so that in a polymer electrolyte membrane fuel cell having at least one gas diffusion electrode (1), no more water escapes, with on the average unchanged operating conditions, than that formed during the reaction of burnable gas and oxidizing agent.

2. The gas diffusion electrode (1) of claim 1,
   **characterized in that** the filling material (3) is contained in a partial region (3') that is not confined by a surface (4) of the electrode (1).

3. The gas diffusion electrode (1) of claim 1 or 2,
   **characterized in that** it is composed of at least one gas diffusion layer (6) and a catalyst layer (7) and **in that** the filling material (3) is located solely in the diffusion layer (6).

4. The gas diffusion electrode (1) of any of claims 1 to 3,
   **characterized in that** the filling material is a nonporous solid material.

5. The gas diffusion electrode (1) of claim 4,
   **characterized in that** the filling material is soot and/or graphite and/or a metal and/or a plastics material.

6. The gas diffusion electrode (1) of claim 5,
   **characterized in that** the plastics material is PTFE.

7. The gas diffusion electrode (1) of any of claims 1 to 6,
   **characterized in that** the filling material is in the form of powder, fibers or platelets that have been introduced in the form of a suspension.

8. The gas diffusion electrode (1) of any of claims 1 to 3,
   **characterized in that** the filling material is a liquid.

**9.** The gas diffusion electrode (1) of claim 8, **characterized in that** the liquid is a fluorocarbon compound.

**10.** A gas diffusion electrode (1) for a polymer electrolyte membrane fuel cell to be operated with a burnable gas and an oxygen-containing gas as oxidizing agent and having an anode electrode, a cathode electrode and a polymer electrolyte membrane disposed therebetween, **characterized in that** it comprises an electrode material (2) and a layer (5') of at least one additional material, said layer (5) reducing the effective diffusion constant of the electrode (1) for water, so that in a polymer electrolyte membrane fuel cell having at least one gas diffusion electrode (1), no more water escapes, with on the average unchanged operating conditions, than that formed during the reaction of burnable gas and oxidizing agent.

**11.** The gas diffusion electrode (1) of claim 10, **characterized in that** the additional material (5) is soot and/or a metal and/or a plastics material.

**12.** The gas diffusion electrode (1) of claim 10, **characterized in that** the additional material (5) is carbonized or graphitized polyimide or carbonized or graphitized polyacrylonitrile or expanded PTFE.

**13.** The gas diffusion electrode (1) of claim 10, **characterized in that** the layer of said additional material (5) consists of a pressed-on mixture of graphite and PTFE powder.

**14.** The gas diffusion electrode (1) of claim 10, **characterized in that** the layer of said additional material (5) consists of metal or graphite platelets.

**15.** The gas diffusion electrode (1) of any of claims 10 to 14, **characterized in that** the layer of said additional material (5) is provided with through-openings.

**16.** The gas diffusion electrode (1) of any of claims 1 to 9, **characterized in that** it comprises a layer (5') of at least one additional material (5) according to any of claims 10 to 15.

**17.** The gas diffusion electrode (1) of any of claims 1 to 16, **characterized in that** the electrode material (2) comprises at least one carbon fiber nonwoven fabric that is impregnated with soot and PTFE, preferably in homogenous manner.

**18.** The gas diffusion electrode (1) of claim 17, **characterized in that** the electrode material (2) comprises at least two plies of a carbon fiber nonwoven fabric impregnated with soot and PTFE, preferably in homogenous manner.

**19.** The gas diffusion electrode (1) of claim 17 or 18, **characterized in that** it consists of an electrode material (2) that is compressed by pressing at a pressure of 100 to 400 MPa (1000 to 4000 bar).

**20.** The gas diffusion electrode (1) of claim 19, **characterized in that** the electrode material (2) is compressed by pressing at a pressure of 200 to 350 MPa (2000 to 3500 bar).

**21.** A polymer electrolyte membrane fuel cell comprising an anode electrode, a cathode electrode and a polymer electrolyte membrane disposed therebetween, **characterized in that** at least one of the electrodes is a gas diffusion electrode (1) according to any of claims 1 to 20.

**22.** A method of operating a polymer electrolyte membrane fuel cell comprising an anode electrode, a cathode electrode and a polymer electrolyte membrane disposed therebetween, **characterized in that**, with on the average unchanged operating conditions, no water is added for humidifying the membrane, and **in that** at least one of the electrodes is a gas diffusion electrode (1) according to any of claims 1 to 20.

**23.** The method of claim 22, **characterized in that** the electrode temperature is at least 50 ˚C, preferably 60 to 75˚C.

**24.** The method of claim 22 or 23, **characterized in that** the cell, during 0.01 to 20% of the operating time, preferably 4 to 10% of the operating time, is subjected to such loads that the cell voltage drops to a value below 300 mV.

**25.** The method of claim 24, **characterized in that** the cell voltage drops to a value below 150 mV.

**26.** The method of any of claims 22 to 25, **characterized in that** cooling of the fuel cell is effected solely by means of an air stream, preferably through the cathode space.

**27.** The method of any of claims 22 to 25, **characterized in that** cooling of the fuel cell is effected by a separately provided cooling means.

**Revendications**

**1.** Electrode à diffusion gazeuse (1) pour une pile à combustible à membrane d'électrolyte polymère destinée à fonctionner avec un gaz combustible et un gaz contenant de l'oxygène comme oxydant, avec une électrode d'anode, une électrode de cathode et une membrane d'électrolyte polymère disposée entre elles, **caractérisée en ce qu'**elle contient au moins dans un domaine partiel (3') une matière de charge (3) qui réduit la constante de diffusion effective de l'électrode (1) pour l'eau par comparaison avec l'électrode non chargée, de sorte que, dans une pile à combustible à membrane d'électrolyte polymère ayant au moins une électrode à diffusion gazeuse (1), dans des conditions de fonctionnement en moyenne non modifiées, il ne se dégage pas plus d'eau que celle formée lors de la réaction du gaz combustible et de l'oxydant.

2. Electrode à diffusion gazeuse (1) selon la revendication 1, **caractérisée en ce que** la matière de charge (3) est contenue dans un domaine partiel (3') qui n'est pas limité par une surface (4) de l'électrode (1).

3. Electrode à diffusion gazeuse (1) selon la revendication 1 ou 2, **caractérisée en ce qu'**elle est constituée par au moins une couche de diffusion gazeuse (6) et une couche de catalyseur (7) et **en ce que** la matière de charge (3) se trouve exclusivement dans la couche de diffusion (6).

4. Electrode à diffusion gazeuse (1) selon l'une des revendications 1 à 3, **caractérisée en ce que** la matière de charge est un solide non poreux.

5. Electrode à diffusion gazeuse (1) selon la revendication 4, **caractérisée en ce que** la matière de charge est le noir de fumée et/ou le graphite et/ou un métal et/ou une matière synthétique.

6. Electrode à diffusion gazeuse (1) selon la revendication 5, **caractérisée en ce que** la matière synthétique est le PTFE.

7. Electrode à diffusion gazeuse (1) selon l'une des revendications 1 à 6, **caractérisée en ce que** la matière de charge est sous forme de poudre, de fibres ou de iameiies qui ont été introduites sous forme de suspension.

8. Electrode à diffusion gazeuse (1) selon l'une des revendications 1 à 3, **caractérisée en ce que** la matière de charge est un liquide.

9. Electrode à diffusion gazeuse (1) selon la revendication 8, **caractérisée en ce que** le liquide est un composé fluorocarboné.

10. Electrode à diffusion gazeuse (1) pour une pile à combustible à membrane d'électrolyte polymère destinée à fonctionner avec un gaz combustible et un gaz contenant de l'oxygène comme oxydant, avec une électrode d'anode, une électrode de cathode et une membrane d'électrolyte polymère disposée entre elles, **caractérisée en ce qu'**elle comporte une matière d'électrode (2) et une couche (5') en au moins une autre matière (5), où la couche (5') réduit la constante de diffusion effective de l'électrode (1) pour l'eau, de sorte que, dans une pile à combustible à membrane d'électrolyte polymère ayant au moins une électrode de diffusion gazeuse (1), dans des conditions de fonctionnement en moyenne non modifiées, il ne se dégage pas plus d'eau que celle formée lors de la réaction du gaz combustible et de l'oxydant.

11. Electrode à diffusion gazeuse (1) selon la revendication 10, **caractérisée en ce que** l'autre matière (5) est le noir de fumée et/ou un métal et/ou une matière synthétique.

12. Electrode à diffusion gazeuse (1) selon la revendication 10, **caractérisée en ce que** l'autre matière (5) est un polyimide carbonisé ou graphitisé ou un polyacrylonitrile carbonisé ou graphitisé ou un PTFE étiré.

13. Electrode à diffusion gazeuse (1) selon la revendication 10, **caractérisée en ce que** la couche en l'autre matière (5) consiste en un mélange comprimé de poudre de graphite et de poudre de PTFE.

14. Electrode à diffusion gazeuse (1) selon la revendication 10, **caractérisée en ce que** la couche en l'autre matière (5) consiste en lamelles de métal ou de graphite.

15. Electrode à diffusion gazeuse (1) selon l'une des revendications 10 à 14, **caractérisée en ce que** la couche en l'autre matière (5) est munie d'ouvertures traversantes.

16. Electrode à diffusion gazeuse (1) selon l'une des revendications 1 à 9, **caractérisée en ce qu'**elle comporte une couche (5') en au moins une autre matière (5) selon l'une des revendications 10 à 15.

17. Electrode à diffusion gazeuse (1) selon l'une des revendications 1 à 16, **caractérisée en ce que** la matière d'électrode (2) comporte au moins un nontissé de carbone qui est imprégné, de préférence de manière homogène, de noir de fumée et de PTFE.

18. Electrode à diffusion gazeuse (1) selon la revendication 17, **caractérisée en ce que** la matière d'électrode (2) comporte au moins deux couches d'un nontissé de carbone qui est imprégné, de préférence de manière homogène, de noir de fumée et de PTFE.

**19.** Electrode à diffusion gazeuse (1) selon la revendication 17 ou 18, **caractérisée en ce qu'**elle consiste en une matière d'électrode (2) qui est compactée par compression à une pression de 100 à 400 MPa (1000 à 4000 bar).

**20.** Electrode à diffusion gazeuse (1) selon la revendication 19, **caractérisée en ce que** la matière d'électrode (2) est compactée par compression à une pression de 200 à 350 MPa (2000 à 3500 bar).

**21.** Pile à combustible à membrane d'électrolyte polymère avec une électrode d'anode, une électrode de cathode et une membrane d'électrolyte polymère disposée entre elles, **caractérisée en ce qu'**au moins l'une des électrodes est une électrode à diffusion gazeuse (1) selon l'une des revendications 1 à 20.

**22.** Procédé pour faire fonctionner une pile à combustible à membrane d'électrolyte polymère avec une électrode d'anode, une électrode de cathode et une membrane d'électrolyte polymère disposée entre elles, **caractérisé en ce que**, dans des conditions de fonctionnement en moyenne non modifiées, aucune addition d'eau pour humidifier la membrane n'a lieu et **en ce qu'**au moins l'une des électrodes est une électrode à diffusion gazeuse (1) selon l'une des revendications 1 à 20.

**23.** Procédé selon la revendication 22, **caractérisé en ce que** la température des électrodes est d'au moins 50˚C, de préférence 60 à 75˚C.

**24.** Procédé selon la revendication 22 ou 23, **caractérisé en ce que** la pile est chargée pendant 0,01 à 20 % de la durée de fonctionnement, de préférence 4 à 10 % de la durée de fonctionnement, de telle manière que la tension de la pile baisse à une valeur inférieure à 300 mV.

**25.** Procédé selon la revendication 24, **caractérisé en ce que** la tension de la pile baisse à une valeur inférieure à 150 mV.

**26.** Procédé selon l'une des revendications 22 à 25, **caractérisé en ce que** le refroidissement de la pile à combustible a lieu exclusivement au moyen d'un courant d'air, de préférence dans le compartiment cathodique.

**27.** Procédé selon l'une des revendications 22 à 25, **caractérisé en ce que** le refroidissement de la pile à combustible a lieu par un dispositif de refroidissement prévu séparément.

Fig. 1

Fig. 2

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 5242764 A
- US 3483036 A
- WO 9724914 A

- US 5350643 A
- DE 19513292 C1
- DE 19544323345

### In der Beschreibung aufgeführte Nicht-Patentliteratur

- Water-Balance Calculations for Solid-Polymer-Elektrolyte Fuel Cells. *Journal of the Electrochemical Society,* November 1990, vol. 137 (11), 3344-3350